# EUROPEAN PATENT APPLICATION

(11) **EP 3 034 469 A1**
(43) Date of publication of application: **22.06.2016**
(21) Application number: 14198845.1
(22) Date of filing: 18.12.2014
(51) Int. Cl.: C01G 23/00, C01G 23/047, H01L 31/0224, H01M 4/1315, H01M 4/485

(54) **Titanium oxyfluorides and methods of their production**

(71) Applicant: Solvay SA, 1120 Bruxelles (BE)
(72) Inventor: The designation of the inventor has not yet been filed
(74) Representative: Mross, Stefan P.M.

(57) **Abstract**

The invention relates to certain processes for the preparation of a crystalline compound of the general formula TiO₂₋ₓF₂ₓ, wherein x is chosen from 0.0001 to 1, as well as to certain crystalline compounds of the general formula TiO₂₋ₓF₂ₓ, wherein x is chosen from 0.0001 to 1.

## Description

The invention relates to certain processes for the preparation of a crystalline compound of the general formula TiO₂₋ₓF₂ₓ, wherein x is chosen from 0.0001 to 1, as well as to certain crystalline compounds of the general formula TiO₂-ₓF₂ₓ, wherein x is chosen from 0.0001 to 1.

The potential use of titanium dioxide (TiO₂) and titanium oxydifluoride (TiOF₂) has been reported for a range of applications, e.g. photocatalysis, UV-absorbing cosmetics, solar cells and lithium ion batteries. For example, Chen, L. et al. Electrochimica Acta, 2012, 62, 408-415 report the formation of crystalline titanium oxydifluoride (TiOF₂), which is subsequently calcinated in air to form titanium dioxide (TiO₂), which crystallised in the anatase crystal form.

However, there is still a need in the electronics and other industries for advantageous processes and crystalline compounds of the general formula TiO₂₋ₓF₂ₓ, wherein x is chosen from 0.0001 to 1 with regard to the problems as detailed in the following:
The crystalline compounds advantageously show an improved crystal, chemical and/or physicochemical stability. Furthermore, they advantageously show improved photocatalytic activity. Furthermore, they advantageously show an improved conductivity, e.g. when used as conducting layers in solar cells and/or as electrode material in lithium ion batteries.

The processes advantageously show improved yields, selectivity, ease of work-up, a reduction in by-products and/or less energy and/or time consumption.

The processes and the crystalline compounds of the present invention solve one or more of at least the aforementioned problems confronting the respective industries.

Consequently, the present invention relates to a process for the preparation of a crystalline compound of the general formula TiO₂₋ₓF₂ₓ, wherein x is chosen from 0.0001 to 1, comprising a step wherein a precursor of the crystalline compound is treated at a temperature of > 300 °C in an atmosphere consisting of one or more inert gases to give the crystalline compound.

In a preferred embodiment, x is chosen from 0.01 to 0.5. Alternatively, x is at least 0.001, 0.01, or 0.1 and the maximum value for x is alternatively 0.5, 0.25 or 0.1. Other preferred ranges for x are from 0.01 to 0.1, 0.0001 to 0.01 and 0.001 to 0.25.

The precursor of the crystalline compound can be any compound containing titanium, oxygen and fluorine atoms. Preferably, the precursor of the crystalline compound is prepared in a reaction of an organic titanium compound with HF. More preferably, the organic titanium compound is titanium tetraisopropoxide. Also preferably, the precursor is prepared in a microwave-assisted reaction. Also preferably, the precursor is prepared as described in Demourgues, A; Journal of Fluorine Chemistry, 2012, 134, 35-43from titanium isopropoxide and aqueous hydrogen fluoride.

The term "inert gas" as used in the context of the present invention is intended to denote a gas, which itself or one or more constituents of which does not undergo a reaction with the precursor of the crystalline compounds or with the crystalline compound. Preferably, the one or more inert gases is chosen from nitrogen, argon or a mixture thereof, more preferably the one or more inert gases is argon.

The precursor of the crystalline compound is treated at a temperature of above 300 °C. This process is also known as annealing or calcination. Preferably, this process is carried out at a temperature of > 500 °C, more preferably between 550 and 650 °C, more preferably around 600 °C. Also preferably, the calcination step is carried out stepwise, i.e. at different temperatures for a specific time. Specifically, the calcination step is carried out at 200 °C for 1 h, at 300 °C for 1 h, at 600 °C for 1 h and then at 300 °C for 1 h. The heating rate between the different temperatures is advantageously chosen from 0.5 to 10 °C per min, preferably at 2 °C per min. The cooling rate between the different temperatures is advantageously chosen from 0.5 to 10 °C per min, preferably at 1 °C per min.

Another aspect of this invention concerns a process for the preparation of a crystalline compound of the general formula TiO₂₋ₓF₂ₓ, wherein x is chosen from 0.0001 to 1, comprising a) a first sintering step as described above and b) a second sintering step wherein the product of the first sintering step is sintered in vacuum.

The term "vacuum" is intended to denote any pressure which is below ambient pressure. Preferably, the vacuum is set at a pressure equal to or below 200 mbar, more preferably equal to or below 100 mbar, even more preferably equal to or below 50 mbar, most preferably equal to or below 10 mbar.

Another aspect of the present invention concerns a crystalline compound obtained or obtainable by any of the processes as described above. Preferably, the crystalline compound is crystallized in the anatase crystal form.

Yet another aspect of the present invention concerns a crystalline compound of the general formula TiO₂₋ₓF₂ₓ, wherein x is chosen from 0.0001 to 1, characterized by a maximum in the UV-vis absorption spectra at a wavelength from 400 to 490 nm, preferably at a wavelength of around 440 nm. Also preferably, the maximum wavelength is from 420 to 460 nm, preferably from 430 to 450 nm.

Still another aspect of the present invention concerns the use of a crystalline compound as described above as conducting material in a solar cell or as electrode material in a battery, preferably in a lithium ion battery.

Still another aspect of the present invention concerns an organic photovoltaic cell, a dye-sensitized solar cell, a lithium-ion battery, an organic light emitting diode, or a superconductor comprising the crystalline compound as described above.

The examples below, without implied limitation, illustrate the invention in a more detailed way.

### Examples

### Methods

XRD measurements were performed on PANalytical X'Pert Pro with Bragg-Brentano θ-θ geometry diffractometer equipped with a secondary monochromator over an angular range of 2θ = 8-80°. Each acquisition lasted for 34 minutes. The Cu-Kα radiation was generated at 45 KV and 40 mA (lambda = 0.15418 nm). The samples were put on sample holders made of aluminium alloy and flattened with a piece of glass.

UV-Vis-NIR spectra were performed on a CARY 17 spectrometer using an integration sphere in the 200-2000 nm wavelength range with a 1nm step and a 2nm bandwidth. Halon was used as white reference for the blank.

X-ray photoelectron spectroscopy (XPS) was performed using VG Scientific 220 i-XL ESCALAB spectrometer with a monochromatized Al Ka source (hm = 1486 6 eV) at 70 W under pressure of 10⁻⁷ Pa in the chamber. The spot size is about 180 1m in diameter. The full spectra (0-1350 eV) were obtained with constant pass energy of 150 eV and high resolution spectra at constant pass energy of 40 eV.

### Example 1 : Reparation of the precursor by a microwave-assisted solvothermal method

A 120 mL Teflon® container was charged with a total volume of 46.4 mL consisting of 20mL n-butanol, 8 mL aqueous-HF (40%) and 18.4 ml titanium isopropoxide corresponding to a HF/Ti molar ratio of 3:1. The container was placed in a Mars5 (CEM µwaves) microwave reactor and heated to a temperature of 100 °C for 30 min resulting in stable suspension. After centrifugation of the suspension, a precipitate was obtained, which was separated and dried at 90 °C.

### Example 2 : Reparation of the crystalline compounds by calcination

The precursor as prepared following example 1 was subjected to a calcination regime which started at 200 °C for 1 h, followed by 300 °C for 1 h, and finally at 600 °C for 1 h before cooling to 300 °C and keeping at that temperature for 1 h. The heating rate between the different temperatures was 2 °C per min. The cooling rate between the different temperatures was 1 °C per min. This calcination step yields a blue color product that crystallized in the anatase structure.

The surface area measured by BET method and is equal to 42 m²/g and the density determined by He picnometry is eaqual to 3.85 g/cm⁻³.

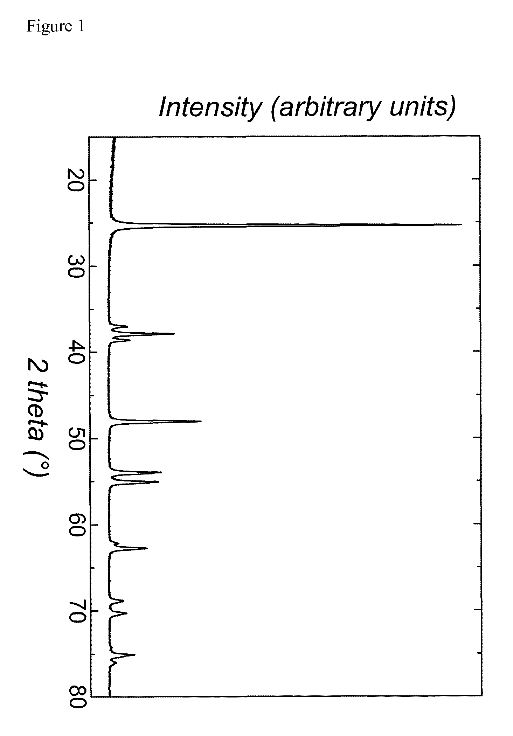

Figure 1: the XRD of the crystalline compound shows the typical pattern for the anatase phase

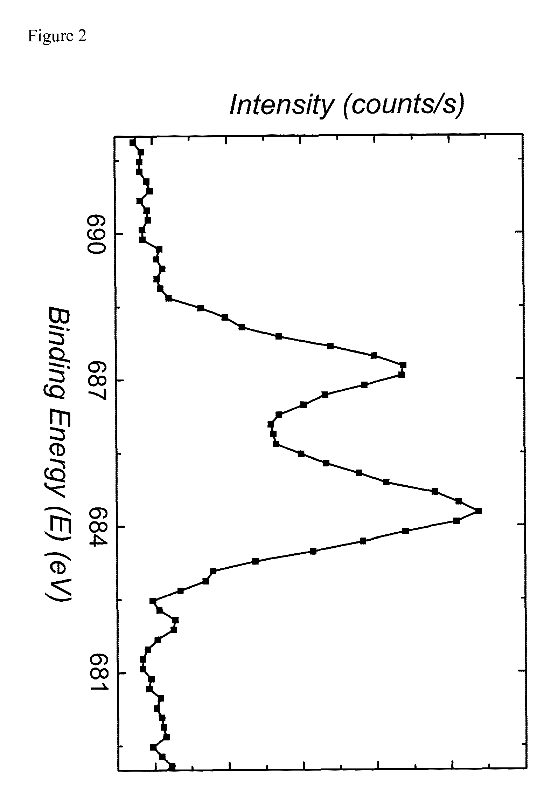

Figure 2: The F1s XPS spectra shows distinct peaks at two different binding energies, which clearly indicates the presence of two different kinds of bonds in the compound, i.e. the presence of both oxygen and fluoride ions.

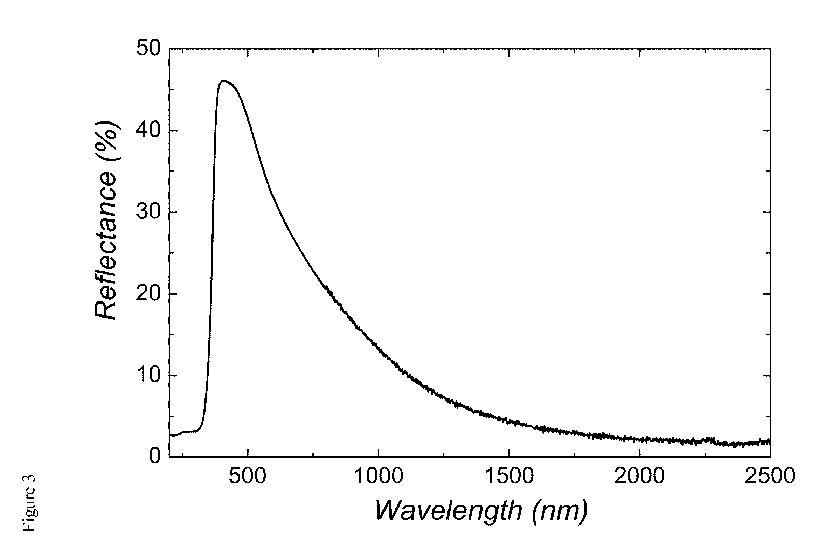

Figure 3: The UV spectra shows a maximum at 440 nm, which distinguishes the material formed in the inventive process from any compound of the general formula TiOₐF_{b}, wherein a is 0.5 to 1.95 and b is 0.1 to 3.0 of the prior art.

## Claims

1. A process for the preparation of a crystalline compound of the general formula TiO₂₋ₓF₂ₓ, wherein x is chosen from 0.0001 to 1, comprising a step wherein a precursor of the crystalline compound is treated at a temperature of > 300 °C in an atmosphere consisting of one or more inert gases to give the crystalline compound.

2. The process according to claim 1 wherein x is chosen from 0.0001 to 0.1, preferably from 0.01 to 0.05.

3. The process according to claim 1 or 2 wherein the temperature is > 500 °C, preferably between 550 and 650 °C, more preferably around 600 °C.

4. The process according to any one of claims 1 to 3 wherein the one or more inert gases is chosen from nitrogen, argon or a mixture thereof, preferably the one or more inert gases is argon.

5. A process for the preparation of a crystalline compound of the general formula TiO₂₋ₓF₂ₓ, wherein x is chosen from 0.0001 to 1, comprising
a) a first sintering step according to the process of any one of claims 1 to 4 and
b) a second sintering step wherein the product of the first sintering step is sintered in vacuum.

6. The process according to any one of claims 1 to 5 wherein the precursor of the crystalline compound is prepared in a reaction of an organic titanium compound with HF.

7. The process according to claim 6 wherein the organic titanium compound is titanium tetraisopropoxide.

8. The process according to claim 6 or 7 wherein the precursor is prepared in a microwave-assisted reaction.

9. A crystalline compound obtained or obtainable by a process according to any one of the claim 1 to 8.

10. The crystalline compound according to claim 9 crystallized in the anatase crystal form.

11. A crystalline compound of the general formula TiO₂₋ₓF₂ₓ, wherein x is chosen from 0.0001 to 1, **characterized by** a maximum in the UV-vis absorption spectra at a wavelength from 400 to 490 nm.

12. The crystalline compound comprising according to claim 10 **characterized by** a maximum in the UV-vis absorption spectra at a wavelength of 440 nm.

13. Use of a crystalline compound prepared according to any one of the claims 1 to 8 or the crystalline compound according to any one of the claims 9 to 12 as a conducting material in a solar cell or as electrode material in a battery.

14. An organic photovoltaic cell, a dye-sensitized solar cell, a lithium-ion battery, an organic light emitting diode, or a superconductor comprising the crystalline compound according to any one of the claims 9 to 12.
